(19)

Europäisches Patentamt

European Patent Office

Office européen des brevets

(11)  EP 4 105 834 A1

# (12) EUROPEAN PATENT APPLICATION
published in accordance with Art. 153(4) EPC

(43) Date of publication:
21.12.2022  Bulletin 2022/51

(21) Application number: 21754657.1

(22) Date of filing: 11.02.2021

(51) International Patent Classification (IPC):
**G06N 3/04** (2006.01)

(86) International application number:
PCT/ES2021/070096

(87) International publication number:
WO 2021/160914 (19.08.2021 Gazette 2021/33)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2020  ES 202030120**

(71) Applicant: **Universitat de les Illes Balears**
**07071 Palma de Mallorca (Islas Baleares) (ES)**

(72) Inventors:
• **ROSSELLO SANZ, Josep Lluis**
**07122 Palma de Mallorca - Islas Baleares (ES)**
• **FRANCO FRASSER, Christiam Camilo**
**07122 Palma de Mallorca - Islas Baleares (ES)**

(74) Representative: **Ponti & Partners, S.L.P**
**C. de Consell de Cent 322**
**08007 Barcelona (ES)**

(54) **ELEMENT FOR GENERATING STOCHASTIC SIGNALS, STOCHASTIC NEURON AND NEURAL NETWORK BASED ON SAID NEURON**

(57)    The present invention consists of a stochastic signal generation element comprising a first binary to stochastic converter, which in turn comprises a first input for receiving a binary signal and a second input for receiving a random signal, and which is configured to convert said binary signal into a first stochastic signal using said random signal, the stochastic signal generation element being characterized in that it comprises a processing unit with a first input for receiving said first stochastic signal and a second input for receiving a reference stochastic signal, the latter being generated from a constant value signal and using said random signal, processing them according to at least one arithmetic function, the result whereof is a stochastic output signal representative of said processing. It further consists of a computational neuron that implements said stochastic signal generation element, likewise a neural network that implements said computational neuron.

Fig. 3

**Description**

**Field of the invention**

The present invention would be included in the field of electronic technology and computational intelligence. A first aspect of the invention consists of a stochastic signal generation element, based on digital hardware and probabilistic computing techniques, suitable for computer systems, such as for example computer systems using convolutional networks of stochastic neurons. Another aspect of the invention consists of a stochastic neuron comprising said stochastic signal generation element, as well as a neural network (of a convolutional type, for example, known as CNN), formed from said stochastic neuron, with which it is possible to obtain high degrees of parallelism and therefore pattern recognition at very high speed.

**Background of the invention**

In recent years the use of extensive neural networks (Deep Neural Networks, DNN) has acquired great relevance due to their great ability to extract useful information from large amounts of data. Its hardware implementation makes it possible to increase the operating speed when performing the computing in parallel by comparing it with approaches based on the use of microprocessors that use sequential Von-Neuman type computing architectures (Software solutions). CNNs are a type of DNN with a Feed-Forward (no feedback) connection, especially useful for the recognition shapes in images, as can be seen in the following references:

- LeCun, Y., Bottou, L., Bengio, Y., Haffner, P. Gradient-based learning applied to document recognition (1998) Proceedings of the IEEE, 86 (11), pp. 2278-2323.

-  Lawrence, S., Giles, C.L., Tsoi, A.C., Back, A.D. Face recognition: A convolutional neural-network approach (1997) IEEE Transactions on Neural Networks, 8 (1), pp. 98-113.

Specifically, a CNN is a type of artificial network where neurons correspond to receptive fields in a very similar way to the neurons in the primary visual cortex of a biological brain, where their application is carried out in two-dimensional matrices; they are therefore very effective for artificial vision tasks, such as in the classification and segmentation of images, among other applications. They consist of multiple layers of artificial neurons that act as convolutional filters of one or more dimensions, where after each layer, usually, a function is added to perform a non-linear causal mapping.

Here, from the image to be processed (raw data provided by the objects observed), a series of computations are performed using different neurons arranged in layers. Each neuron performs a relatively simple processing from its inputs (which may be from the image to be processed or from other neurons) and the output it provides consists of a non-linear function (called activation function) of the weighted sum of its inputs, as indicated in the following equation:

$$y_i = f\left(\sum_{i=1}^{N} \omega_{ij} x_j - T_i\right)$$

The above formula shows the dependence of the output of the *ith* neuron ($y_i$) in relation to a total of N inputs defined as $x_j$, as well as a selection of weights for each of these inputs and exclusive to each neuron ($w_{ij}$ parameters) and of a bias value specific to each neuron ($T_i$). The activation function / is a non-linear function, such as the Heaviside function, the sigmoidal function, or the rectifier function known as the Rectified Linear Unit (ReLU), which evaluates the maximum between the linear combination of the inputs $x_j$ of the above formula and a reference value that may be zero.

In a CNN-type network, the neurons are arranged in processing layers, wherein each neuron of the first layer would receive direct information from the image to be processed while the inner layers would be fed by the responses of the neurons arranged in the preceding layer. The functionalities of each layer are usually of two types: convolutional and reduction. The convolutional layer consists of the convolution of the preceding image by means of a kernel (which is also often called a unitary impulse response); mathematically, convolutional layers can be thought of as the realization of a projection of input information onto a certain subspace defined by the kernel, and where the reduction of information is relatively small. The second functionality of the layers consists of a drastic information reduction process, where different areas of the image to be processed are selected, and a dominant value is selected that may be the signal with the highest value (said type of layers will be called max-pooling) or an average value of said signals (average pooling). The end result is a reduced information on the input signal coming from the previous convolutional layer.

With the concatenation of both types of neural layers (convolutional and pooling), the orientation of the information of the input image is altered, and certain characteristics of the same are selected, in order to reduce the information, but increasing the degree of abstraction. In this way, the information bits of the input can represent intensity values of the image to be processed while at the output we would obtain a category that we want to recognize.

Therefore, the main application of CNN would be the processing of images for their recognition and interpretation. In any case, due to its transversality, the field of CNN applications is enormous and there are currently thousands of scientific works based on the use of said neural processing architecture, covering processes such as facial recognition in the aforementioned work of Lawrence et al., or the recognition of text, such as that disclosed in patent document EP 1598770, entitled: "Low resolution optical character recognition for camera acquired documents".

One of the drawbacks of CNN processing is its high computational cost due to the large number of operations that extend over the totality of the images that are generated from the original (successive convolutions and pooling processes). Said computational cost is specified in an image processing time, as well as in the power consumption associated with said processing, which can be prohibitive in the case of desiring to apply them to large amounts of data (as is the case of high speed video processing). In the case of traditional data processing systems (software solutions), general purpose architectures based on the use of processors are not optimal for their application to the implementation of CNNs, and therefore are associated with both a consumption and a response time that are prohibitive for certain types of applications. It is for this reason that hardware systems have been developed that try to implement and optimally parallelize these processes. As examples of attempts to optimize CNNs by using hardware we find the following publication:

- Zhang, C., Li, P., Sun, G., Guan, Y., Xiao, B., Cong, J. "Optimizing FPGA-based accelerator design for deep convolutional neural networks" (2015) FPGA 2015 - 2015 ACM/SIGDA International Symposium on Field-Programmable Gate Arrays, pp. 161-170.

In this work, Zhang and his collaborators show a CNN optimization methodology and implement it in reconfigurable logic devices (FPGAs). Their approach is based on the use of classical digital logic, where parallelism is increased in relation to implementations based on the use of generalist microprocessors but which does not fully exploit the intrinsic parallelism of CNNs.

With the aim of increasing parallelism and adapting the processing hardware as much as possible to the architecture of DNNs in general, strategies have been developed where unconventional digital logics, such as stochastic computing, are used. Stochastic computation is a digital logic in which the operations between signals obey probabilistic rules. This is the case of the work of the following publication, applied to a type of deep networks, such as Deep Belief Networks, and which are a type of networks that are usually used for the recognition of shapes, and which are inspired by statistical physics:

- Sanni, K., Garreau, G., Molin, J.L., Andreou, A.G. "FPGA implementation of a Deep Belief Network architecture for character recognition using stochastic computation", (2015) 2015 49th Annual Conference on Information Sciences and Systems, CISS 2015, art. no. 7086904.

This work uses a linear approach to the nonlinear sigmoid function, although it does not clarify how to implement certain layers, like Max-pooling, for the case where the neurons have to be arranged in the form of a CNN-type network. On the other hand, it assumes only the use of decorrelated signals for the implementation of the network, which leaves aside the possibility of exploiting correlations between stochastic signals, and which would greatly help to reduce the hardware.

In relation to the implementation of unconventional methodologies for hardware optimization, but applied to convolutional neural networks, the following publication is available:

- Alawad, M., Lin, M. "Stochastic-Based Deep Convolutional Networks with Reconfigurable Logic Fabric" (2016) IEEE Transactions on Multi-Scale Computing Systems, 2 (4), art. no. 7547913, pp. 242-256.

In this study, certain properties of the probability theory are used, such as the relationship between the probability density function of the sum of two independent random variables and the probability density of these variables individually (related by a convolution of both). The basis of the acceleration of the CNN process lies in the implementation of this probabilistic property instead of using individual neural elements.

Another non-conventional methodology, also based on the use of probabilistic properties, can be found in the following publication:

- Ren, A., Li, Z., Ding, C., Qiu, Q., Wang, Y., Li, J., Qian, X., Yuan, B. "SC-DCNN: Highly-scalable deep convolutional neural network using stochastic computing" (2017) International Conference on Architectural Support for Programming Languages and Operating Systems - ASPLOS, Part F127193, pp. 405-418.

In this work, stochastic logic is used to implement both the convolution process and the max-pooling process. On the other hand, it uses state machines to implement the tangent-hyperbolic function (function $f$ of the aforementioned equation), which can complicate the design considerably (as can be seen in Figure 6). Nor does it exploit the use of correlated signals to simplify the implementation of the activation function.

On the other hand, a proposal for a stochastic neural network can also be found in the following recent publication:

- Li, Z., Li, J., Ren, A., Cai, R., Ding, C., Qian, X., Draper, J., Yuan, B., Tang, J., Qiu, Q., Wang, Y. "HEIF: Highly Efficient Stochastic Computing-Based Inference Framework for Deep Neural Networks" (2019) IEEE Transactions on Computer-Aided Design of Integrated Circuits and Systems, 38 (8), art. no. 8403283, pp. 1543-1556.

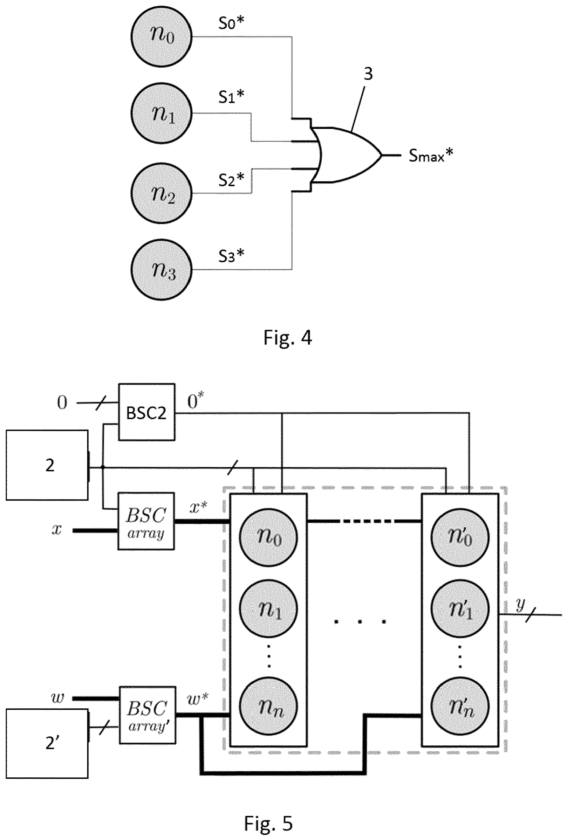

In this work a binary block known as an approximate parallel counter (APC) is used, as shown in Fig.4c. This is used to perform the weighted sum of the neural inputs, but a complicated circuit is performed for the implementation of the ReLU-type activation function or the max-pooling block (in Fig 6 of said reference). In fact, the activation function obtained is not a classical ReLU but a "clipped ReLU", that is, a saturated ReLU.

Stochastic logic (or stochastic computation) is an alternative to traditional binary logic where quantities are encoded by the toggle frequency of the bits, forcing such toggle to be of a stochastic-type nature. Stochastic computation (SC) is an approximate computer methodology that represents signals that use the toggle frequency of time-dependent bitstreams. Each SC signal is composed of pulses that represent the probability of finding a high value (logical '1') in a sequence of bits. For example, the number 0.75 could be represented by a bitstream in which the probability of finding a logical '1' along the bitstream is 75%, (1,1,0,1) for four bits, or (0,1,1,0,1,1,1) for an eight-bit frame. This encoding is referred to as a unipolar representation and each value will be between zero and one. To include negative values a different encoding is required, as is the case with bipolar encoding, where the number of zeros is subtracted from the number of ones and finally divided by the total number of bits. This encoding is equivalent to implementing the change of variables $p^* = 2p - 1$, where '$p$' is the unipolar representation of the number. Bipolar encoding provides a [-1,1] range of possible values.

One of the main advantages of using stochastic logic is the low cost in hardware resources to implement complex functions, and that it is also dependent on the correlation between signals. For example, an XNOR gate implements a multiplication in bipolar encoding when both signals are temporarily decorrelated ($f = x \cdot y$), but implements the unit minus the absolute value of the difference between the two signals if they are correlated ($f = 1 - |x - y|$).

In the literature, different stochastic neuron designs have been proposed, although none of them has exploited the correlation of signals that can considerably simplify CNNs. In the present invention, the correlation between the output signals of neurons is used for the efficient implementation of convolutional neural networks.

## Description of the invention

The present invention consists primarily of a stochastic signal generation element, likewise a computational neuron, specifically a stochastic neuron, comprising said element, and a computational neural network comprising a plurality of such neurons. The proposed neuron is oriented to implement deep artificial neural networks, especially convolutional neural networks.

The first aspect of the invention consists of a stochastic signal generation element, which comprises a first binary to stochastic converter (or BSC), which usually consists of a binary two's complement comparator. This BSC, in turn, comprises a first input for receiving a binary signal and a second input for receiving a random signal (random being understood as containing some type of randomness, either pure random or pseudo-random), and is configured to convert at the output thereof said binary signal into a first stochastic signal, from said random signal.

The present stochastic signal generation element is characterized in that it comprises a processing unit, which in turn comprises a first input for receiving said first stochastic signal from the BSC, and a second input for receiving a second stochastic signal, used as a reference stochastic signal and generated from a constant value signal (such as the value zero, for example), having used the same random signal used by the BSC to generate said second stochastic signal. This processing unit is configured to process said first stochastic signal from the BSC and said second stochastic signal (or reference stochastic signal) according to at least one arithmetic function, to generate as a result a stochastic output signal representative of said processing.

With the proviso that the reference stochastic signal received by the processing unit is generated having used the same random signal used by the BSC, a correlation between signals from different stochastic signal generation elements is achieved.

As a result, it is possible for the processing unit to apply a simple arithmetic function, such as that applied by means of an OR-type or AND-type logic gate, and thereby to implement an unsaturated activation function to obtain a stochastic output signal that can be correlated with other possible stochastic signal generation elements.

Thus, for an exemplary embodiment of the stochastic signal generation element of the first aspect of the invention, the processing unit is an OR-type logic gate, therefore the arithmetical function applied by the same consists of a *maximum* function *(max(a,b))*, which is the basis for putting into effect the Rectified Linear Unit (or ReLU). For another exemplary embodiment, the processing unit is an AND-type logic gate; therefore, the arithmetic function applied by the same consists of an activation function of the *min* type *(a, b)*.

For example, said stochastic signal generation element may be part of a stochastic neuron for a computational neural network, which is another aspect of the present invention, specifically a second aspect for which the stochastic neuron comprises a stochastic signal generation element in accordance with the first aspect.

The stochastic neuron of the present invention preferably comprises an approximate parallel counter (APC) disposed to receive a plurality of stochastic input signals and configured to add said plurality of input signals and convert them into an output signal encoded in binary two's complement notation at its output. This output signal will be the binary input signal of the above-described BSC of the stochastic signal generation element.

In turn, for an exemplary embodiment, the stochastic neuron of the second aspect of the present invention comprises a plurality of processing subunits, each of them disposed to receive an external stochastic signal (such as the signal from other neurons), as well as a stochastic connection weight signal, and configured to process them by applying an arithmetical function, to generate output signals. Since both signals received by the processing subunits are uncorrelated, for an exemplary embodiment wherein these subunits consist of XNOR logic gates, the function applied is the multiplication of both stochastic signals in bipolar coding. In another possible embodiment, these consist of an AND logic gate, and the function applied is the multiplication of both stochastic signals in unipolar coding. Thereafter, the output signals generated by these processing subunits are operatively linked with said APC, such that they correspond to said stochastic APC input signals.

Another aspect of the present invention, specifically a third aspect, consists of a computational neural network implemented with a plurality of stochastic neurons defined in accordance with the second aspect of the invention, described above, where some are operatively interconnected with others.

Preferably, the present computational neural network comprises a second binary to stochastic or BSC converter configured to generate said stochastic reference signal from the input of a constant value signal and the input of said random signal, and simultaneously to send it to the aforementioned processing units of the different neurons. Likewise, for an exemplary embodiment, the neural network of the third aspect of the present invention comprises a random number generator configured to generate said random signal and simultaneously to send it to the different binary to stochastic converters, thus correlating all the stochastic signals generated by the APCs of the neurons.

In most CNN implementations, the common operations used are: multiplication, addition, and the maximum function or ReLU. These operations can easily be implemented in stochastic circuitry if the correlation is used correctly. The main advantages provided by using correlated signals for the implementation of convolutional neural networks consist of:

a) savings in the hardware resources used, by not requiring the implementation of different random number generators for each neuron, without losing precision in the result (in implementations with stochastic logic, the greatest percentage of resources are used in the generation of the random/ random numbers),

b) a simplification in the implementation of the max-pooling function and of the convolution, by only including a simple computing unit, such as a logic gate (different efforts and designs have been presented in the literature to be able to implement this function in neural networks, but when using uncorrelated signals, the designs proposed require considerable hardware space),

c) the possibility of adding more depth layers in the neural network without the need to use several random number generators, since the number of generators is constant regardless of the number of layers of the network (unlike in other implementations, whereas the layers of the network increase, so does the number of random number generators).

In a preferred embodiment of the computational neural network, the random number generator is of the Linear Feedback Shift Register (LFSR) type, given its low cost in hardware resources and its simple implementation.

For an exemplary embodiment, the computational neural network of the third aspect of the present invention comprises an OR-group gate, configured to receive the stochastic output signals from a group of stochastic neurons and to provide the maximum value thereof at its output; or, to implement a Min-pooling type function by replacing the OR-group gate with an AND-group gate.

For another exemplary embodiment, the computational neural network comprises an array of binary to stochastic converters, its converters being configured to convert an initial signal, received at their respective first inputs, and to convert it, at its outputs, into an initial stochastic signal, using said random signal received at their respective second inputs.

Preferably, the neural network of the present invention comprises a second random number generator, as well as an array of binary to stochastic converters. The converters of this array are configured to convert a connection weight signal received at a first input and convert it, at its output, into said stochastic weight signal, using for this purpose the aforementioned random signal from the second generator. Thus, decorrelated signals can be used to make the product between inputs and weights, and correlated signals can be used to generate the output transfer function of the neurons.

In a first embodiment, the neural network comprises at least one layer of the Max-pooling type, i.e., it is implemented with neurons comprising stochastic signal generation elements whose processing unit is an OR-type logic gate. In a second embodiment, the neural network comprises a layer of the Min-pooling type, i.e. it is implemented with neurons comprising stochastic signal generation elements whose processing unit is an AND-type logic gate. And in an even more preferred embodiment, the neural network is implemented as a convolutional network comprising more than one layer of the Max-pooling type, as well as of the Min-pooling type.

In convolutional neural networks, optimal for processing 2D or 3D images, or in general with an N-dimensional structure, the entire network is arranged in different layers of neurons. After certain characteristics are extracted by a convolutional neural layer, a sub-sampling operation is usually applied to reduce the dimensions of the data processing at the next layer. As discussed, one of the most used operations is the Max-pooling block, where the sub-sampling is carried out by extracting the maximum value of the output of each neuron that is comprised within a window of the convolutional neuron layer. State-of-the-art implementations use a set of blocks (accumulator, comparator, and counters) to implement the Max-pooling function, which involves a considerable use of resources. However, with the present invention, it is possible to use the correlation achieved for all neurons of the network (by using the same random signal in all BSC converters of each neuron), and thus, to implement the maximum grouping function by means of a single OR logic gate. That is, it is possible to implement the Max-pooling function (widely used in the implementation of deep neural networks) to the output signals of the neurons of a network layer through an OR gate, or to implement a Min-pooling type function through an AND gate.

**Brief description of the drawings**

Figure 1.- Schematic representation of the stochastic signal generation element of the present invention.

Figure 2.- Schematic representation of a preferred embodiment of a stochastic neuron that uses an OR logic gate and thereby implements a ReLU-type activation function.

Figure 3.- Schematic representation of a preferred embodiment of a max-pooling type layer of a neural network, comprising two stochastic neurons with their corresponding OR logic gates.

Figure 4.- Schematic representation of a preferred embodiment of a single-layer neural network of the max-pooling type with four neurons, whose output is directed toward an OR logic gate to generate the output transfer function of the neurons, in this case being the maximum signal of all of them.

Figure 5.- Schematic representation of a preferred embodiment of a convolutional multi-layer neural network, which uses decorrelated signals to make the product between inputs and weights, and correlated signals to generate the output transfer function from the neurons.

Figure 6 - Comparative table of the performance of the present neural network with respect to other neural network implementations.

DESCRIPTION OF PREFERRED EMBODIMENTS

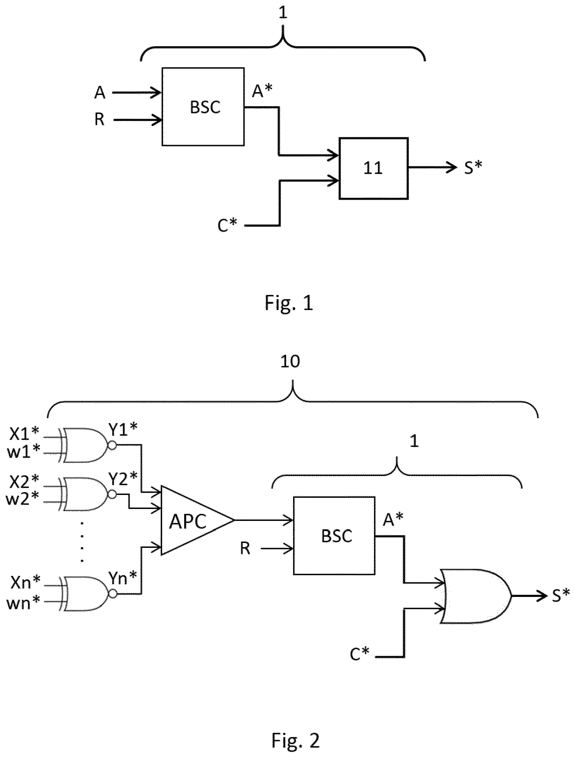

Preferred embodiments of the different inventions claimed are described below, with reference to Figures 1 to 6.

A schematic representation of the stochastic signal generation element, the object of a first aspect of the present invention, is shown in Figure 1. As can be seen, the stochastic signal generation element (1) comprises a first binary to stochastic converter (BSC), which in turn comprises a first input for receiving a binary signal (A) and a second input for receiving a random signal (R), and at its output said binary signal (A) is converted into a stochastic signal (A*). It then comprises a processing unit (11) which receives said stochastic signal (A*) and a reference stochastic signal (C*). The latter is generated from a constant value signal (C) and using said random signal (R). The output of this processing unit (11) is a stochastic output signal (S*) representative of the arithmetic function processed.

In relation to a second aspect of the present invention, Figure 2 shows a schematic representation of a preferred embodiment of a stochastic neuron (10), including a preferred embodiment of the stochastic signal generation element (1), which comprises an OR logic gate as a processing unit for implementing a ReLU-type activation function at its output (S*). This embodiment of a stochastic neuron (10) in turn, comprises a plurality of XNOR logic gates, each of them arranged to receive an external stochastic signal (X1* - Xn*) and a stochastic weight signal (w1* - wn*). Considering that these two signals are not correlated, the function applied by the XNOR gates consists of the multiplication of both stochastic signals in bipolar coding.

Subsequently, the outputs of said XNOR gates of the present embodiment of a stochastic neuron (10) are operatively linked with the inputs of an approximate parallel counter (APC), which is configured to make the sum of said input signals (Y1* - Yn*) and to convert them into binary notation encoded in two's complement at its output. In other words, the approximate parallel counter (APC) evaluates how many signals at '1' are present at the outputs of the XNOR gates and provides a binary signal of the sum at their outputs. In turn, said sum is sent to the binary to stochastic converter (BSC) of the stochastic signal generation element (1). As has been discussed, this embodiment of a stochastic signal generation element (1) comprises an OR logic gate for implementing a ReLU type activation function at its output (S*) by means of a same random signal (R) received at its binary to stochastic converter (BSC).

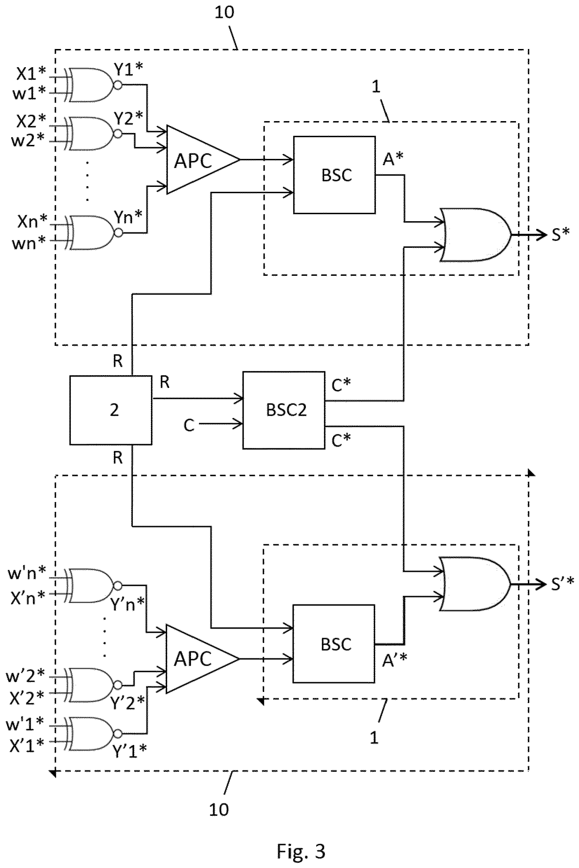

Figure 3 schematically shows an exemplary embodiment of the connection of two neurons of a neural network, which is the subject of a third aspect of the present invention. This embodiment comprises two stochastic neurons (10) with two OR logic gates, such as that shown in Figure 2 and described above. Likewise, it comprises a second binary to stochastic converter (BSC2), configured to generate said reference stochastic signal (C*) and send it to the OR logic gates of both stochastic neurons (10). As can be seen, the reference stochastic signal (C*) is generated in the second binary to stochastic converter (BSC2) from a constant value signal (C) and said random signal (R).

As can be deduced by a person skilled in the art, the implementation for generating correlated neural signals of the present invention contrasts with the implementations of the state of the art, where it is more complicated to generate a ReLU function, which also has the drawback of being saturated, and therefore not being the standard ReLU used in typical Machine Learning processes.

As an additional effect of the present invention, as can be deduced in Figure 4, since all the outputs of the network neurons are correlated, it is possible to efficiently implement the Max-pooling function (widely used in the implementation of deep neural networks) to the stochastic output signals ($S_0$* - $S_3$*) from a group of stochastic neurons ($n_0$ - $n_3$) of a network layer by means of an OR-group gate (3) and to provide the maximum value thereof at its output ($S_{max}$*); or, to implement a function of the Min-pooling type by replacing the OR-group gate (3) with an AND-group gate.

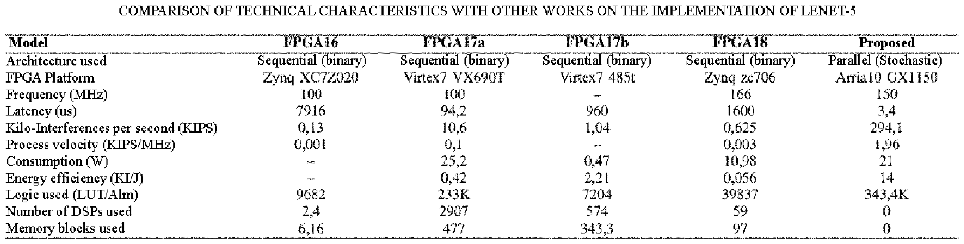

Figure 5 is a block diagram showing a neural network in a more general manner, where two random number generators (2, 2') are used. As can be seen, the first random number generator (2) is used for the conversion of the input signals (x), the reference signal (0) and the output signals of the approximate parallel counters of the neurons (no - nn, n'o - n'n) of a convolutional network. The second random number generator (2') is used only for the conversion to stochastic of the weights (w) of the network.

As can be deduced, the output of each layer of the neural network of the present invention is compatible with the input signals of the neurons of the next layer without any risk of inaccuracy, since when they are generated by a first random number generator (2), they can be multiplied with the stochastic weight signals (w*), which are not correlated with said input signals, being generated by arrays of binary to stochastic converters (BSC array') that use the random numbers from a second random number generator (2').

As can be seen, the present implementation of stochastic neurons enables the entire neural network to be executed with only two random number generators (2, 2') for the entire network, something that has not yet been considered in the state of the art, and which simplifies the cost in terms of digital gates to be used to implement the entire network.

Figure 6 shows a comparison chart of the performance of the present and other deep neural network implementations, which is known as LeNet-5 in the field of Machine Learning (as shown in publication Y. LeCun, L. Bottou, Y. Bengio and P. Haffner: Gradient-Based Learning Applied to Document Recognition, Proceedings of the IEEE, 86(11):2278-2324, November 1998). The hardware implementations with which the proposed model is compared are the following:

- FPGA16. S. I. Venieris and C. Bouganis, "fpgaconvnet: A framework for mapping convolutional neural networks on fpgas," in 2016 IEEE 24th Annual International Symposium on Field-Programmable Custom Computing Machines (FCCM) , May 2016, pp. 40-47.

- FPGA17a. Z. Liu, Y. Dou, J. Jiang, J. Xu, S. Li, Y. Zhou, and Y. Xu, "Throughput-optimized fpga accelerator for deep convolutional neural networks,"TRETS, vol. 10, pp. 17:1-17:23, 2017.

- FPGA17b. Z. Li, L. Wang, S. Guo, Y. Deng, Q. Dou, H. Zhou, and W. Lu, "Laius: An 8-bit fixed-point cnn hardware inference engine," in 2017 IEEE International Symposium on Parallel and Distributed Processing with Applications and 2017 IEEE International Conference on Ubiquitous Computing and Communications (ISPA/IUCC), Dec 2017, pp. 143-150.

- FPGA18: S.-S. Park, K.-B. Park, and K. Chung, "Implementation of a cnn accelerator on an embedded soc platform using sdsoc," 02 2018, pp.161-165.

To perform the comparison, the LeNet-5 network has been implemented in an FPGA. This CNN design is aimed at processing a highly standardized database in Machine Learning on handwritten number recognition (MNIST) and is composed of 60,000 training images and 10,000 test images. The CNN architecture of the LeNet-5 type consists of two convolutional layers and three Fully Connected layers. The success rate in MNIST of said CNN is in the order of 98.5%, while the hardware implementation used in the proposed neural model is 97.6% (somewhat lower than in software due to binarising signals and since it is a probabilistic computation methodology).

The implementation has been carried out using an Arria 10 10AX115H2F34E1SG FPGA operating at a clock frequency of 150MHz with an eight-bit accuracy for the binary signals.

As can be seen, the method proposed outperforms other architectures in terms of performance and energy efficiency. The results show that the implementation of the stochastic CNN proposed achieves a performance of 27 times greater (measured in inferences per second and per megahertz) compared with FPGA17a, and 6.3 times greater energy efficiency (measured in inferences per Joule) compared with FPGA17b, making it promising for embedded system applications.

Thanks to the new neuron design proposed, which reduces the area consumption of the entire system, the architecture proposed adjusts a complete CNN in a single FPGA and in a totally parallel manner, contrary to what was done in the other three implementations, which only implement a part of the network, iterating on a recurring basis (sequential implementation).

This aggregate parallelism is the main reason for the lower latency of the design proposed, since the successive iteration of the network is not necessary.

The table in Figure 6 also highlights the hardware resources required per task. The above implementations require a large area by using specific hardware blocks, such as RAM and digital signal processing (DSP) blocks. In the present proposal, DSP blocks are avoided since a non-conventional computing technique (Stochastic Computing) is used instead of classical binary logic. At the same time, no memory blocks are required since the calculation is not performed recursively, which reduces the primary source of power consumption, this being data transfer and memory access operations with the memory outside the chip.

What characterizes the first aspect of the present proposal is the combination of a binary to stochastic converter (BSC) with a processing unit (11) using correlated stochastic signals. Another aspect of the invention is its subsequent combination with an array of processing subunits, such as XNOR gates, and an approximate parallel counter (APC) linked to the binary to stochastic converter (BSC) for implementing a stochastic neuron (10). And a third aspect is its implementation in a network with a random number generator (2) common to all the neurons. Considering that the random number generator (2) is generating a random signal (R) of both a negative and a positive number (the probability that the sign bit generated is equal to '0' or '1' is 50%), the level zero stochastic signal will consist of a bit that is randomly fluctuating between 0 and 1, with a 50% probability for each level. The key point of this invention is that of correctly combining said stochastic reference value with the signal from the approximate parallel counter (APC), which has been converted to stochastic by the binary to stochastic converter (BSC), using the same random signal (R). Thus, the zero level stochastic signal and the stochastic signal (A*) provided by the binary to stochastic converter (BSC) will be fully correlated, and their combination, for example in an OR gate, may provide the maximum signal.

**Claims**

1. A stochastic signal generation element (1) comprising a first binary to stochastic converter (BSC), which in turn comprises a first input for receiving a binary signal (A) and a second input for receiving a random signal (R), and which is configured to convert said binary signal (A) into a first stochastic signal (A*) using said random signal (R), the stochastic signal generation element (1) being **characterized in that** it comprises a processing unit (11) comprising a first input for receiving said first stochastic signal (A*) and a second input for receiving a second stochastic signal (C*), the latter being generated from a constant value signal (C) and using said random signal (R), said processing unit (11) being configured to process said first stochastic signal (A*) and said reference stochastic signal (C*) in accordance with at least one arithmetic function, to generate, as a result, a stochastic output signal (S*) representative of said processing.

2. A stochastic signal generation element (1) as claimed in claim 1, **characterized in that** the processing unit (11) is an OR-type logic gate, so that the arithmetic function applied thereby consists of an activation function of the rectified linear unit (ReLU) type.

3. A stochastic signal generation element (1) as claimed in claim 1, **characterized in that** the processing unit (11) is an AND-type logic gate, so that the arithmetic function applied thereby consists of a min-type activation function (A*, C*).

4. A stochastic neuron (10) for a computational neural network, **characterized in that** it comprises a stochastic signal generation element (1) as claimed in any of the preceding claims.

5. A stochastic neuron (10) for a computational neural network, as claimed in claim 4, **characterized in that** it comprises an approximate parallel counter (APC) arranged to receive a plurality of stochastic input signals (Y1* - Yn*), which is configured to make a sum of said plurality of input signals (Y1* - Yn*) and convert them into an output signal in binary notation encoded in two's complement at its output; said output signal being the input binary signal (A) of said binary to stochastic converter (BSC).

6. A stochastic neuron (10) for a computational neural network, as claimed in claim 5, **characterized in that** it comprises a plurality of processing subunits, each of these arranged to receive an external stochastic signal (X1* - Xn*) and a stochastic weight signal (w1* - wn*), and configured to process them by applying an arithmetic function, to generate output signals constituting the input stochastic signals (Y1* - Yn*) of said approximate parallel counter (APC).

7. A stochastic neuron (10) for a computational neural network, as claimed in claim 6, **characterized in that** said processing subunits consist of XNOR logic gates, each configured to bipolarly multiply said external stochastic signal (X1* - Xn*) with the corresponding stochastic weight signal (w1* - wn*).

8. A stochastic neuron (10) for a computational neural network, as claimed in claim 6, **characterized in that** said processing subunits consist of AND logic gates, each configured to unipolarly multiply said external stochastic signal (X1* - Xn*) with the corresponding stochastic weight signal (w1* - wn*).

9. A computational neural network, **characterized in that** it comprises a plurality of stochastic neurons (10) as claimed in any of claims 4 to 8, some of said plurality of stochastic neurons (10) being operatively interconnected with others.

10. A computational neural network, as claimed in claim 9, **characterized in that** it comprises a second binary to stochastic converter (BSC2), configured to generate said reference stochastic signal (C*) from a constant value signal input (C) and a random signal input (R), and simultaneously to send it to the first binary to stochastic converters (BSCs) and to the different processing units (11) of said plurality of stochastic neurons (10).

11. A computational neural network, as claimed in claim 10, **characterized in that** it comprises a random number generator (2) configured to generate said random signal (R), and simultaneously to send it to the different binary to stochastic converters (BSC, BSC2) of said plurality of stochastic neurons (10).

12. A computational neural network, as claimed in claim 11, **characterized in that** the random number generator (2) is of the Linear Feedback Shift Register type.

13. A computational neural network, as claimed in any of claims 9 to 12, **characterized in that** it comprises an OR-group gate (3), configured to receive the stochastic output signals ($S_0$* - $S_3$*) from a group of stochastic neurons ($n_0$ - $n_3$) and to provide the maximum value thereof at its output ($S_{max}$*).

14. A computational neural network, as claimed in any of claims 9 to 13, **characterized in that** it comprises an array of binary to stochastic converters (BSC array), the converters thereof being configured to convert an initial signal (x) received at their respective first inputs, and to convert it, at their outputs, into an initial stochastic signal (x*), using said random signal (R) received at their respective second inputs.

15. A computational neural network, as claimed in any of claims 9 to 14, **characterized in that** it comprises a second random number generator (2') and an array of binary to stochastic weight converters (BSC array'), its converters being configured to convert a weight signal (w) received at a first input, and to convert it, at its output, into said stochastic weight signal (w*), using a second random signal received from the second random number generator (2').

16. A computational neural network, as claimed in any of claims 9 to 15, comprising a plurality of stochastic neurons (10), as described in claim 2, **characterized in that** it comprises a Max-pooling type layer, with stochastic neurons (10) comprising stochastic signal generation elements (1) the processing unit (11) whereof is an OR-type logic gate.

17. A computational neural network, as claimed in any of claims 9 to 15, comprising a plurality of stochastic neurons (10), as described in claim 3, **characterized in that** it comprises a Min-pooling type layer, with artificial neurons (10) comprising stochastic signal generation elements (1), the processing unit (11) whereof is an AND-type logic gate.

18. A computational neural network, as claimed in claims 16 or 17, **characterized in that** it is implemented as a convolutional network comprising more than one layer of the Max-pooling type, as well as of the Min-pooling type.

Fig. 1

Fig. 2

Fig. 3

Fig. 4

Fig. 5

COMPARISON OF TECHNICAL CHARACTERISTICS WITH OTHER WORKS ON THE IMPLEMENTATION OF LENET-5

| Model | FPGA16 | FPGA17a | FPGA17b | FPGA18 | Proposed |
|---|---|---|---|---|---|
| Architecture used | Sequential (binary) | Sequential (binary) | Sequential (binary) | Sequential (binary) | Parallel (Stochastic) |
| FPGA Platform | Zynq XC7Z020 | Virtex7 VX690T | Virtex7 485t | Zynq zc706 | Arria10 GX1150 |
| Frequency (MHz) | 100 | 100 | – | 166 | 150 |
| Latency (us) | 7916 | 94,2 | 960 | 1600 | 3,4 |
| Kilo-Interferences per second (KIPS) | 0,13 | 10,6 | 1,04 | 0,625 | 294,1 |
| Process velocity (KIPS/MHz) | 0,001 | 0,1 | – | 0,003 | 1,96 |
| Consumption (W) | – | 25,2 | 0,47 | 10,98 | 21 |
| Energy efficiency (KI/J) | – | 0,42 | 2,21 | 0,056 | 14 |
| Logic used (LUT/Alm) | 9682 | 233K | 7204 | 39837 | 343,4K |
| Number of DSPs used | 2,4 | 2907 | 574 | 59 | 0 |
| Memory blocks used | 6,16 | 477 | 343,3 | 97 | 0 |

## INTERNATIONAL SEARCH REPORT

| International application No. |
| --- |
| PCT/ES2021/070096 |

### A. CLASSIFICATION OF SUBJECT MATTER

*G06N3/04* (2006.01)

According to International Patent Classification (IPC) or to both national classification and IPC

### B. FIELDS SEARCHED

Minimum documentation searched (classification system followed by classification symbols)
G06N

Documentation searched other than minimum documentation to the extent that such documents are included in the fields searched

Electronic data base consulted during the international search (name of data base and, where practicable, search terms used)

EPODOC, INVENES, WPI, NPL, XPIEE, XPI3E

### C. DOCUMENTS CONSIDERED TO BE RELEVANT

| Category* | Citation of document, with indication, where appropriate, of the relevant passages | Relevant to claim No. |
| --- | --- | --- |
| X | LI ZHE et al.. HEIF: Highly Efficient Stochastic Computing-Based Inference Framework for Deep Neural Networks. Ieee Transactions on Computer Aided Design Of Integrated Circuits And Systems, 20190801 Ieee Service Center, Piscataway, Nj, Us., 01/08/2019, Vol. 38, N° 8, pages 1543 - 1556, ISSN 0278-0070, <DOI: 10.1109/TCAD.2018.2852752> the whole document | 1-18 |
| A | LI ZHE et al.. Towards Budget-Driven Hardware Optimization for Deep Convolutional Neural Networks Using Stochastic Computing. 2018 Ieee Computer Society Annual Symposium on Vlsi (isvlsi), 20180708 Ieee., 08/07/2018, pages 28 - 33, <DOI: 10.1109/ISVLSI.2018.00016> The whole the document | 1-18 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 22/03/2021 | **(24/03/2021)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> M. Muñoz Sanchez <br><br><br> Telephone No. 91 3495349 |

Form PCT/ISA/210 (second sheet) (January 2015)

## INTERNATIONAL SEARCH REPORT

| | International application No. |
|---|---|
| | PCT/ES2021/070096 |

C (continuation). DOCUMENTS CONSIDERED TO BE RELEVANT

| Category * | Citation of documents, with indication, where appropriate, of the relevant passages | Relevant to claim No. |
|---|---|---|
| A | REN AO et al. Designing reconfigurable large-scale deep learning systems using stochastic computing. 2016 Ieee International Conference on Rebooting Computing (icrc), 20161017 Ieee., 17/10/2016, pages 1 - 7, <DOI: 10.1109/ICRC.2016.7738685> the whole document | 1-18 |
| A | YU JOONSANG et al.. Accurate and Efficient Stochastic Computing Hardware for Convolutional Neural Networks. 2017 Ieee International Conference on Computer Design (iccd), 20171105 Ieee., 05/11/2017, pages 105 - 112, ISSN 1063-6404, <DOI: 10.1109/ICCD.2017.24> the whole document | 1-18 |
| A | LI JI et al.. Towards acceleration of Deep convolutional neural networks using stochastic computing. 2017 22nd Asia And South Pacific Design Automation Conference (asp-dac), 20170116 Ieee., 16/01/2017, pages 115 - 120, <DOI: 10.1109/ASPDAC.2017.7858306> the whole document | 1-18 |
| A | NEUGEBAUER FLORIAN et al.. On the Limits of Stochastic Computing. 2019 Ieee International Conference on Rebooting Computing (icrc), 20191106 Ieee., 06/11/2019, pages 1 - 8, <DOI: 10.1109/ICRC.2019.8914706> the whole document | 1-18 |
| A | NGUYEN DUY-ANH et al.. An Efficient Hardware Implementation of Artificial Neural Network based on Stochastic Computing. 2018 5th Nafosted Conference on Information And Computer Science (nics), 20181123 Ieee., 23/11/2018, pages 237 - 242, <DOI: 10.1109/NICS.2018.8606843> the whole document | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1598770 A, Lawrence

**Non-patent literature cited in the description**

- **LECUN, Y. ; BOTTOU, L. ; BENGIO, Y. ; HAFFNER, P.** Gradient-based learning applied to document recognition. *Proceedings of the IEEE,* 1998, vol. 86 (11), 2278-2323
- **LAWRENCE, S. ; GILES, C.L. ; TSOI, A.C. ; BACK, A.D.** Face recognition: A convolutional neural-network approach. *IEEE Transactions on Neural Networks,* 1997, vol. 8 (1), 98-113
- **ZHANG, C. ; LI, P. ; SUN, G. ; GUAN, Y. ; XIAO, B. ; CONG, J.** Optimizing FPGA-based accelerator design for deep convolutional neural networks. *FPGA 2015 - 2015 ACM/SIGDA International Symposium on Field-Programmable Gate Arrays,* 2015, 161-170
- **SANNI, K. ; GARREAU, G. ; MOLIN, J.L. ; ANDREOU, A.G.** FPGA implementation of a Deep Belief Network architecture for character recognition using stochastic computation. *2015 49th Annual Conference on Information Sciences and Systems, CISS 2015,* 2015
- **ALAWAD, M. ; LIN, M.** Stochastic-Based Deep Convolutional Networks with Reconfigurable Logic Fabric. *IEEE Transactions on Multi-Scale Computing Systems,* 2016, vol. 2 (4), 242-256
- **REN, A. ; LI, Z. ; DING, C. ; QIU, Q. ; WANG, Y. ; LI, J. ; QIAN, X. ; YUAN, B.** SC-DCNN: Highly-scalable deep convolutional neural network using stochastic computing. *International Conference on Architectural Support for Programming Languages and Operating Systems - ASPLOS,* 2017, 405-418

- **LI, Z. ; LI, J. ; REN, A. ; CAI, R. ; DING, C. ; QIAN, X. ; DRAPER, J. ; YUAN, B. ; TANG, J. ; QIU, Q.** HEIF: Highly Efficient Stochastic Computing-Based Inference Framework for Deep Neural Networks. *IEEE Transactions on Computer-Aided Design of Integrated Circuits and Systems,* 2019, vol. 38 (8), 1543-1556
- **Y. LECUN ; L. BOTTOU ; Y. BENGIO ; P. HAFFNER.** Gradient-Based Learning Applied to Document Recognition. *Proceedings of the IEEE,* November 1998, vol. 86 (11), 2278-2324
- **S. I. VENIERIS ; C. BOUGANIS.** fpgaconvnet: A framework for mapping convolutional neural networks on fpgas. *2016 IEEE 24th Annual International Symposium on Field-Programmable Custom Computing Machines (FCCM),* May 2016, 40-47
- **Z. LIU ; Y. DOU ; J. JIANG ; J. XU ; S. LI ; Y. ZHOU ; Y. XU.** Throughput-optimized fpga accelerator for deep convolutional neural networks. *TRETS,* 2017, vol. 10, 17-1, 17-23
- **Z. LI ; L. WANG ; S. GUO ; Y. DENG ; Q. DOU ; H. ZHOU ; W. LU.** Laius: An 8-bit fixed-point cnn hardware inference engine. *2017 IEEE International Symposium on Parallel and Distributed Processing with Applications and 2017 IEEE International Conference on Ubiquitous Computing and Communications (ISPA/IUCC),* December 2017, 143-150
- **S.-S. PARK ; K.-B. PARK ; K. CHUNG.** *Implementation of a cnn accelerator on an embedded soc platform using sdsoc,* 2018, vol. 02, 161-165